# EUROPÄISCHE PATENTANMELDUNG

(11) **EP 4 001 520 A1**
(43) Veröffentlichungstag der Anmeldung: **25.05.2022**
(21) Anmeldenummer: 21198650.0
(22) Anmeldetag: 23.09.2021
(51) Int. Cl.: E03B 7/00, E03B 11/00, B01D 29/03, B01D 35/027, A62C 5/00, A62C 35/02, A62C 99/00, C02F 1/00

(54) **LÖSCHWASSERCONTAINER**

(30) Priorität: 20.11.2020 DE 202020106688 U
(71) Anmelder: Schambach, Michael, 69483 Wald-Michelbach (DE)
(72) Erfinder: Schambach, Michael, 69483 Wald-Michelbach (DE)
(74) Vertreter: Reiser & Partner Patentanwälte mbB

(57) **Zusammenfassung**

Löschwassercontainer (1), umfassend einen Behälterboden (2) und mehrere Seitenwände (3), welche einen Containerraum begrenzen, wobei der Containerraum einen ersten Bereich (4) zur Aufnahme von aufbereitetem Löschwasser und einen zweiten Bereich (5) zum Befüllen des Containerraums mit verunreinigtem Löschwasser aufweist, wobei zwischen dem ersten Bereich (4) und dem zweiten Bereich (5) ein Sieb (6) angeordnet ist.

## Beschreibung

Die Erfindung betrifft einen Löschwassercontainer, umfassend einen Behälterboden und mehrere Seitenwände, welche einen Containerraum begrenzen, wobei der Containerraum einen ersten Bereich zur Aufnahme von aufbereitetem Löschwasser und einen zweiten Bereich zum Befüllen des Containerraums mit verunreinigtem Löschwasser aufweist.

Ein derartiger Löschwassercontainer ist beispielsweise aus der DE 20 2018 100 727 U1 bekannt. Löschwassercontainer dienen dazu, Löschwasser in Bereichen bereitzustellen, in welchen eine erhöhte Brandgefahr und damit einhergehend ein erhöhter Bedarf von Löschwasser besteht.

Dabei ist es zum einen möglich, dass der Löschwassercontainer mit Löschwasser befüllt bereitgestellt wird. Es ist aber auch möglich, dass der Löschwassercontainer entleert bereitgestellt oder im Einsatzfall zu einer Einsatzstelle transportiert und erst im Einsatzfall befüllt wird.

Der Löschwassercontainer bildet eine Art Pufferspeicher, in welchen Löschwasser diskontinuierlich eingefüllt und aus welchem gleichzeitig Löschwasser kontinuierlich entnommen werden kann. Dabei ist insbesondere vorteilhaft, dass zum Befüllen des Löschwassercontainers diverse Behältnisse, auch solche aus der Landwirtschaft, verwendet werden können. Die Entnahme des Löschwassers aus dem Löschwassercontainer erfolgt mit feuerwehreigenem Gerät.

In Bereichen, in denen kein leitungsgebundenes Löschwasser bereitgestellt werden kann oder die abgelegen sind, ist es dabei denkbar, dass zum Befüllen des Löschwassercontainers verschmutzte oder mit Reststoffen versehene Behältnisse eingesetzt werden. Derartige Behältnisse sind beispielsweise Güllebehälter, die üblicherweise der Ausbringung von flüssigen Reststoffen aus der Tierhaltung auf landwirtschaftlich genutzten Böden dienen. Dabei ist problematisch, dass Güllebehälter Steine, Stroh und dergleichen enthalten können. Gelangen die Reststoffe zusammen mit dem Löschwasser in den Löschwassercontainer, besteht die Gefahr, dass feuerwehrtechnische Einrichtungen, beispielsweise Pumpen und Einrichtungen zur Löschmittelabgabe, verstopfen oder beschädigt werden.

Der Erfindung liegt die Aufgabe zugrunde, einen Löschwassercontainer bereitzustellen, welcher eine störungsfreie Versorgung mit Löschwasser ermöglicht.

Diese Aufgabe wird mit den Merkmalen von Anspruch 1 gelöst. Auf vorteilhafte Ausgestaltungen nehmen die Unteransprüche Bezug.

Der erfindungsgemäße Löschwassercontainer umfasst einen Behälterboden und mehrere Seitenwände, welche einen Containerraum begrenzen, wobei der Containerraum einen ersten Bereich zur Aufnahme von aufbereitetem Löschwasser und einen zweiten Bereich zum Befüllen des Containerbereichs mit verunreinigtem Löschwasser aufweist, wobei zwischen dem ersten Bereich und dem zweiten Bereich ein Sieb angeordnet ist.

Erfindungsgemäß ist somit der Löschwassercontainer in zwei Bereiche unterteilt, welche jeweils Löschwasser aufnehmen. Der erste Bereich nimmt aufbereitetes Löschwasser auf, welches durch eine geeignete Vorrichtung entnommen und der Einrichtung zur Löschmittelabgabe, beispielsweise einem Strahlrohr, zugeführt werden kann. Der Löschwassercontainer weist ferner einen zweiten Bereich auf, welcher zum Befüllen des Containerraums mit verunreinigtem Löschwasser ausgebildet ist.

Dabei ist zwischen dem ersten Bereich und dem zweiten Bereich ein Sieb angeordnet. Hierbei ist vorteilhaft, dass Verschmutzungen, beispielsweise Steine und dergleichen, welche während des Befüllens über ein verschmutztes Füllbehältnis in den zweiten Bereich gelangen, durch das Sieb zurückgehalten werden. Dadurch kann verhindert werden, dass Verunreinigungen, welche beispielsweise durch landwirtschaftliche Behältnisse zusammen mit Löschwasser in den Löschwassercontainer gelangen, feuerwehrtechnische Anlagen, beispielsweise Pumpen oder Strahlrohre, verstopfen oder sogar beschädigen. Hierbei ist insbesondere vorteilhaft, dass der Löschwassercontainer sehr flexibel und unabhängig von der Ausgestaltung und dem Zustand der Füllbehältnisse mit Löschwasser befüllt werden kann. Dadurch ist der Löschwassercontainer insbesondere für Bereiche geeignet, in denen große Mengen von Löschwasser benötigt werden, und/oder für Bereiche, in denen die Beschaffung von Löschwasser schwierig ist.

Vorzugsweise ist das Sieb aus einem Lochblech ausgebildet. Dementsprechend besteht das Sieb bei dieser Ausgestaltung aus metallischem Werkstoff und ist besonders robust. Die Maschenweite des Lochblechs kann an die Anforderungen der feuerwehrtechnischen Geräte angepasst werden.

Das Sieb kann flächig ausgebildet sein und sich senkrecht zum Behälterboden erstrecken und dabei eine Trennwand bilden. Bei dieser Ausgestaltung ist der Löschwassercontainer in zwei nebeneinander angeordnete Bereiche aufgetrennt, wobei ein erster Bereich zur Aufnahme des aufbereiteten Löschwassers dient und ein zweiter Bereich zum Befüllen mit verunreinigtem Löschwasser ausgerüstet ist. Wird in den zweiten Bereich verunreinigtes Löschwasser eingefüllt, strömt dieses durch das Sieb hindurch in den ersten Bereich, wobei Verunreinigungen abgeschieden werden, welche größer sind als die Maschenweite des Siebes.

Gemäß einer alternativen Ausgestaltung kann der zweite Bereich durch einen Kasten begrenzt werden, der den Kanten der Seitenwände zugeordnet ist. Dementsprechend ist der Kasten im oberen Bereich des Löschwassercontainers angeordnet. Bei dieser Ausgestaltung ergibt sich ein größeres Volumen für den das aufbereitete Löschwasser aufnehmenden ersten Bereich.

Der Kasten kann in Richtung des ersten Bereiches von einem Kastenboden und einer Kastenwand begrenzt sein, wobei der Kastenboden als Sieb ausgebildet ist. Vorzugsweise ist auch die Kastenwand als Sieb ausgebildet. Bei dieser Ausgestaltung strömt das in den zweiten Bereich eingefüllte verunreinigte Löschwasser unmittelbar durch den Kastenboden und die Kastenwand hindurch, welche jeweils als Sieb ausgebildet sind.

Vorzugsweise ist das Sieb entnehmbar in dem Löschwassercontainer angeordnet. Dadurch kann das Sieb einfach ausgetauscht werden, wenn es verschlissen ist. Des Weiteren kann das Sieb besonders einfach abgereinigt werden. Dabei ist das Sieb vorzugsweise formschlüssig, beispielsweise über Halteelemente wie Haken, Winkel, Profile oder dergleichen, an den Seitenwänden befestigt. Alternativ kann das Sieb auch fest in dem Löschwassercontainer montiert sein, beispielsweise mittels einer Schweißverbindung. In diesem Fall kann sich das Sieb nicht versehentlich lösen.

Gemäß einer weiteren Ausgestaltung kann zumindest ein Teil des Siebes schwenkbar an einer Seitenwand angeordnet sein. Dadurch kann das Sieb in einer Ausgangsposition verunreinigtes Löschwasser filtern, so dass beispielsweise Steine oder andere Verunreinigungen durch das Sieb zurückgehalten werden. Zum Abreinigen des Siebes kann zumindest ein Teil des Siebes um eine Drehachse, die vorzugsweise parallel zur Kante der verbundenen Seitenwand verläuft und beispielsweise über eine Bolzen- oder Scharnierverbindung erzeugt werden kann, geschwenkt werden. Durch diese Schwenkbewegung kann eine Reinigungsposition erreicht werden. In dieser Reinigungsposition können die in dem Sieb zurückgehaltenen Verunreinigungen besonders einfach entnommen werden. Dies wird insbesondere dadurch erreicht, dass die Reinigungsposition vorzugsweise auf einer dem aufbereiteten Löschwasser abgewandten Seite einer Seitenwand angeordnet ist. Dadurch soll vermieden werden, dass herausgefilterte Verunreinigungen beim Reinigungsprozess in das aufbereitete Löschwasser gelangen.

Das Sieb kann zumindest teilweise relativ zum Behälterboden des Löschwassercontainers geneigt angeordnet sein. Hierbei ist vorteilhaft, dass sich Verunreinigungen aufgrund der Schwerkraft auf der abgesenkten Seite vermehrt ansammeln und eine gezieltere Reinigung den Reinigungsprozess vereinfacht.

Besonders bevorzugt ist dabei der abgesenkte Bereich des Siebes schwenkbar, so dass der abgesenkte Bereich des Siebs gezielt gereinigt werden kann.

Das Sieb kann in mehrere, vorzugsweise zwei, Siebsegmente unterteilt sein, die jeweils einen Teil des Kastenbodens und/oder einen Teil der Kastenwand umfassen können. Dabei ist zumindest ein Siebsegmente schwenkbar mit einer Seitenwand des Löschwassercontainers verbunden. Das schwenkbare Siebsegment ist vorzugsweise in einem Bereich des Siebes ausgebildet, in welchem sich Verunreinigungen hauptsächlich anlagern. Beispielsweise kann das Sieb relativ zum Behälterboden des Löschwassercontainers geneigt angeordnet sein, wobei das schwenkbare Siebsegment in der Ausgangsstellung im Vergleich zu den übrigen Siebsegmenten den geringsten Abstand zum Behälterboden aufweist. Durch die schwenkbare Lagerung des Siebsegments ist eine einfachere Reinigung möglich, wodurch insgesamt eine gezielte und effiziente Siebreinigung erreicht wird.

Die Schwenkbewegung des Siebes kann über ein Bewegungsmittel erfolgen. In diesem Zusammenhang sind verschiedenste Antriebsarten denkbar, beispielsweise ein manueller Kurbelantrieb, ein elektrischer Antrieb oder eine federbasierte Spannvorrichtung. Bevorzugt ist das Bewegungsmittel aber als Hydraulikzylinder oder Gasdruckfeder ausgebildet.

Die Maschenweite des Siebes beträgt vorzugsweise zwischen 2 mm und 10 mm, besonders vorzugsweise beträgt die Maschenweite 5 mm. Dabei werden grobe Verunreinigungen wie größere Steine und dergleichen zurückgehalten. Kleinere Verunreinigungen können problemlos durch die feuerwehrtechnischen Anlagen transportiert werden.

An zumindest einer Seitenwand und/oder einer Tür können zum Entnehmen und/oder Befüllen mit Löschwasser Anschlüsse vorgesehen sein. Die Wasseranschlüsse sind dabei vorzugsweise übliche Kupplungen, die bei feuerwehrtechnischen Einrichtungen zum Einsatz gelangen. In diesem Zusammenhang sind die Wasseranschlüsse besonders vorzugsweise als Bajonettverschluss, insbesondere in Form einer Storz-Kupplung, ausgebildet. Des Weiteren können die Wasseranschlüsse mit Ventilen versehen sein. An einer Seitenwand kann ein weiterer Anschluss angebracht sein. Der weitere Anschluss ist vorzugsweise mittig in der Seitenwand angeordnet. Der weitere Anschluss kann über einen Stopfen wasserdicht verschlossen werden, beispielsweise mittels einer Gewindeverbindung.

Dabei ist vorteilhaft, dass der Löschwassercontainer mit leitungsgebundenem Löschwasser befüllt werden kann, wenn dieses in ausreichender Menge zur Verfügung gestellt werden kann. Vorzugsweise befindet sich dabei im Inneren des Löschwassercontainers eine Rohranordnung mit einem freien Auslauf im oberen Bereich, wodurch ein Rückströmen von Löschwasser in die angeschlossene Wasserleitung verhindert werden kann.

Zumindest einem Wasseranschluss zur Entnahme von Löschwasser kann eine Saugeinrichtung zugeordnet sein, welche im Inneren des Löschwassercontainers angeordnet ist. In diesem Zusammenhang ist insbesondere denkbar, dass die Saugeinrichtung als Schwimmsauger ausgebildet ist. Diese ist mit einer Schlauchleitung an den Wasseranschluss zur Entnahme von Löschwasser angebunden. Der Schwimmsauger weist einen Schwimmer auf, so dass stets Löschwasser oberflächennah entnommen wird. Dadurch kann verhindert werden, dass Verschmutzungen, welche sich am Boden des ersten Bereichs ansammeln, angesaugt werden.

Der Löschwassercontainer kann drei Seitenwände und eine Tür aufweisen. In diesem Zusammenhang ist insbesondere denkbar, dass der Löschwassercontainer als Abrollcontainer ausgebildet ist. Abrollcontainer sind normiert und können mit entsprechend ausgerüsteten Fahrzeugen einfach transportiert werden. Abrollcontainer können an den Einsatzort transportiert und dort abgesetzt werden.

Durch die Tür ist das Innere des Löschwassercontainers einfach zugängig. Beispielsweise kann der Löschwassercontainer zum Reinigen geöffnet werden. Die Tür ist vorzugsweise mit einer umlaufenden Dichtung versehen, welche die Tür gegenüber den Seitenwänden und dem Behälterboden abdichtet.

Es ist auch denkbar, dass während des Transports feuerwehrtechnisches Gerät im Inneren des Löschwassercontainers transportiert wird. In diesem Zusammenhang ist insbesondere denkbar, dass der Behälterboden mit einer Einrichtung zur Aufnahme von feuerwehrtechnischem Gerät versehen ist. Das Gerät kann beispielsweise in Form eines oder mehrerer Materialwagen ausgebildet sein, welche auf Rollen gelagert sind. Auf dem Behälterboden und/oder an den Seitenwänden können in diesem Fall Einrichtungen vorgesehen sein, über die die Materialwagen fest im Inneren des Löschwassercontainers befestigt werden können. Derartige Einrichtungen sind beispielsweise Nutschienen, Zurrösen und dergleichen. Der Materialwagen kann Schläuche, Anschlüsse, Werkzeug und dergleichen aufnehmen. Des Weiteren können Auffahrrampen vorgesehen sein, über die Fahrzeuge in das Innere des Löschwassercontainers geschoben oder gezogen werden können.

Einige Ausgestaltungen des erfindungsgemäßen Löschwassercontainers werden nachfolgend anhand der Figuren näher dargestellt. Diese zeigen, jeweils schematisch:

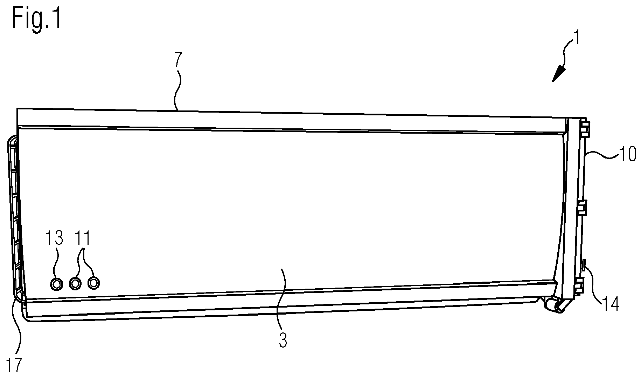

- Fig. 1: einen Löschwassercontainer;
- Fig. 2: einen Löschwassercontainer mit geöffneter Tür und Sieb in der Ausgangsstellung;
- Fig. 3: der Löschwassercontainer gemäß Figur 2 mit dem Sieb in der Reinigungsstellung;

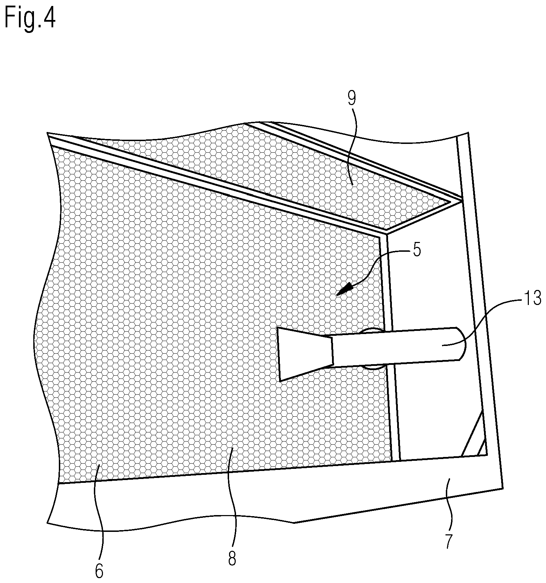

- Fig. 4: im Detail den zweiten Bereich mit Sieb;

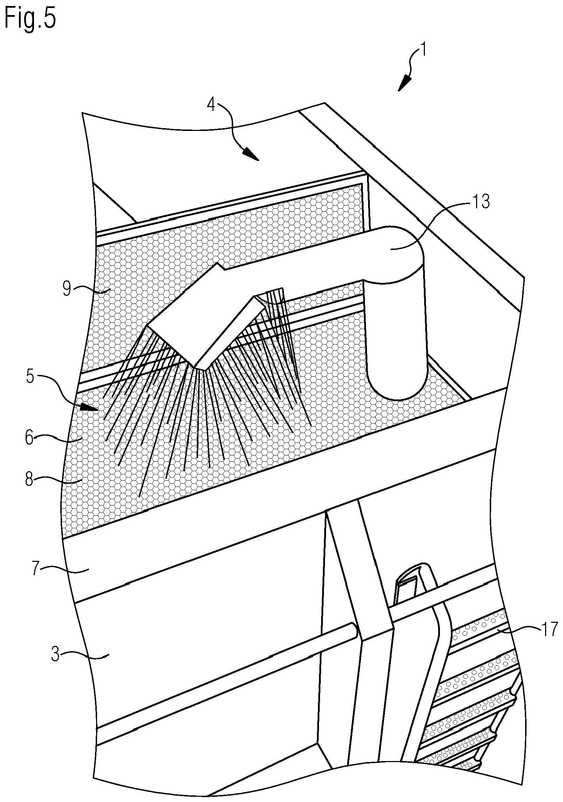

- Fig. 5: im Detail den zweiten Bereich während des Befüllens;

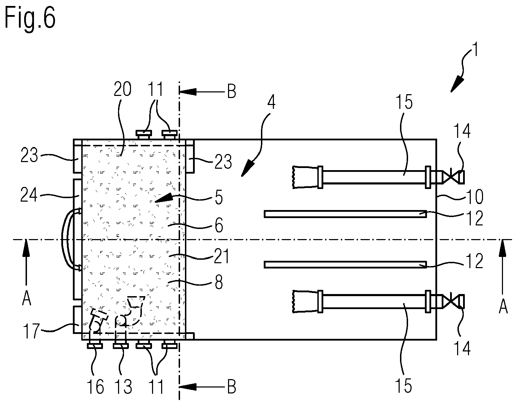

- Fig. 6: eine Draufsicht des Löschwassercontainers mit den beiden Siebsegmenten;
- Fig. 7: einen Längsschnitt des Löschwassercontainers;
- Fig. 8: einen Querschnitt des Löschwassercontainers.

### Bezugszeichenliste:

- 1: Löschwassercontainer
- 2: Behälterboden
- 3: Seitenwände

- 4: erster Bereich zur Aufnahme von aufbereitetem Löschwasser
- 5: zweiter Bereich zur Aufnahme von verunreinigtem Löschwasser
- 6: Sieb
- 7: Kanten der Seitenwände
- 8: Kastenboden
- 9: Kastenwand
- 10: Tür
- 11: Wasseranschlüsse zum Befüllen
- 12: Einrichtung zur Aufnahme und Sicherung von Materialwagen
- 13: Wasseranschlüsse zum Einfüllen von verunreinigtem Löschwasser
- 14: Wasseranschlüsse zum Entnehmen von Löschwasser
- 15: Saugschlauch
- 16: Wasseranschluss für die Reinigung
- 17: Leiter
- 18: Materialwagen
- 19: Dichtung
- 20: erstes Siebsegment
- 21: zweites Siebsegment
- 22: Anschluss
- 23: Bewegungsmittel
- 24: Trittbrett

Die Figuren zeigen einen Löschwassercontainer 1, welcher als Abrollcontainer ausgebildet ist und auf einem entsprechend ausgerüsteten Fahrzeug transportiert werden kann. Der Löschwassercontainer 1 umfasst einen Behälterboden 2, drei Seitenwände 3 und eine Tür 10 in Form einer Doppelflügeltür, welche schwenkbar an den Seitenwänden 3 angebracht ist. Die Tür 10 ist mit einer Dichtung 19 versehen, welche die Tür 10 gegenüber den Seitenwänden 3 und dem Behälterboden 2 abdichtet. Der Behälterboden 2, die Seitenwände 3 und die Tür 10 begrenzen einen Containerraum, wobei der Containerraum einen ersten Bereich 4 zur Aufnahme von aufbereitetem Löschwasser und einen zweiten Bereich 5 zum Befüllen des Containerraums mit verunreinigtem Löschwasser aufweist.

Zwischen dem ersten Bereich 4 und dem zweitem Bereich 5 ist ein Sieb 6 angeordnet. Das Sieb 6 ist aus einem Lochblech ausgebildet und weist eine Maschenweite von 5 mm auf.

Das Sieb 6 kann flächig ausgebildet sein und sich senkrecht zum Behälterboden 2 erstrecken und eine Trennwand bilden. Bei der vorliegenden Ausgestaltung ist der zweite Bereich 5 als Kasten ausgebildet, der den Kanten 7 der Seitenwände 3 zugeordnet ist. Der Kasten ist in Richtung des ersten Bereichs 4 von einem Kastenboden 8 und einer Kastenwand 9 begrenzt. Der Kastenboden 8 und die Kastenwand 9 sind als Sieb 6 und aus einem Lochblech ausgebildet. Der Kasten ist fest in dem Löschwassercontainer befestigt. Dazu sind an den Seitenwänden 3 Profile angebracht, welche den Kasten formschlüssig aufnehmen.

Das Befüllen des zweiten Bereiches 5 mit verunreinigtem Löschwasser kann über Wasseranschlüsse 13 erfolgen. Die Wasseranschlüsse 13 weisen innen freie Ausläufe auf, welche mit Schwallblechen versehen sind.

Zum Abreinigen des Siebes 6 ist an einer Seitenwand 3 ein Wasseranschluss zur Reinigung 16 angeordnet.

An der Tür 10 sind zum Entnehmen von Löschwasser zwei Wasseranschlüsse 14 mit Ventilen zur Entnahme von Löschwasser vorgesehen. Die Wasseranschlüsse 14 münden auf der Innenseite, also in dem ersten Bereich 4, in einen Saugschlauch 15, an dessen freiem Ende ein Schwimmsauger angeordnet ist.

Die Seitenwände 3 sind ferner jeweils mit zwei Wasseranschlüssen 11 zum Befüllen mit leitungsgebundenem, sauberem Löschwasser versehen. Die Wasseranschlüsse 11 zum Befüllen münden auf der Innenseite in Rohre, welche sich in Richtung der Kanten 7 der Seitenwände 3 erstrecken und welche an den freien Enden unterhalb des Siebes 6 um 180° umgebogen sind und dort einen freien Auslauf bilden. An den Mündungen sind jeweils Schwallbleche angeordnet. An der stirnseitigen Seitenwand 3 ist ein weiterer Anschluss 22 angeordnet.

Alle Wasseranschlüsse zum Befüllen, Reinigen und Entnehmen 11, 13, 14, 16 weisen jeweils einen Bajonettanschluss in Form einer Storz-Kupplung auf.

Der Behälterboden 2 ist mit einer Einrichtung 12 zur Aufnahme und Sicherung mehrerer Materialwagen versehen. Die Einrichtung 12 umfasst Zurrösen.

Der Löschwassercontainer 1 umfasst vorliegend an den ersten Bereich 4 angepasste Materialwagen 18. Die Materialwagen 18 sind auf Rollen gelagert und können über ausfahrbare Stützen fest auf dem Behälterboden 2 oder einem anderen Untergrund aufgestellt werden. Die Materialwagen 18 sind mit Klappwänden versehen, um das in den Materialwagen 18 gelagerte Material entnehmen zu können.

Über eine an einer Seitenwand 3 befestigte Leiter 17 kann der Containerraum auch bei geschlossener Tür 10 erreicht werden. Des Weiteren kann über die Leiter 17 auch eine Abdeckeinrichtung in Form einer Rollplane erreicht werden, um den Löschwassercontainer 1 durch Schließen der Abdeckeinrichtung abdecken zu können. Dem Leiter 17 ist ein Trittbrett 24 zugeordnet, welches an einer Seitenwand 3 befestigt ist.

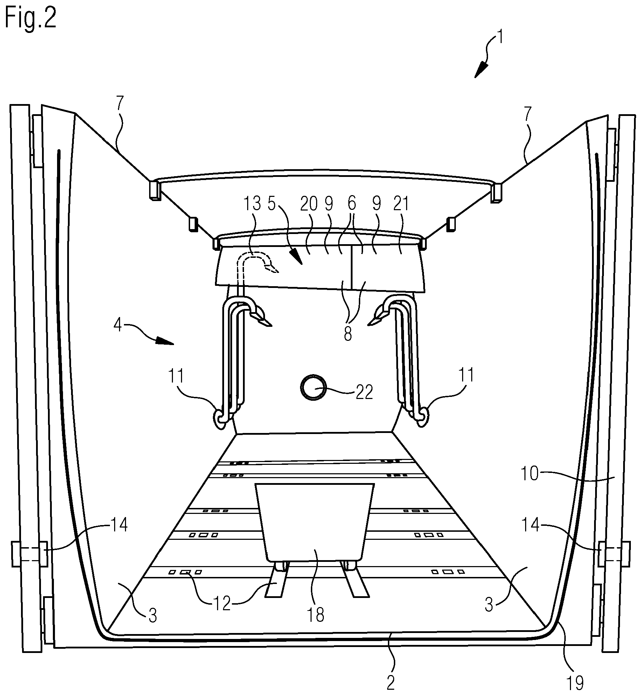

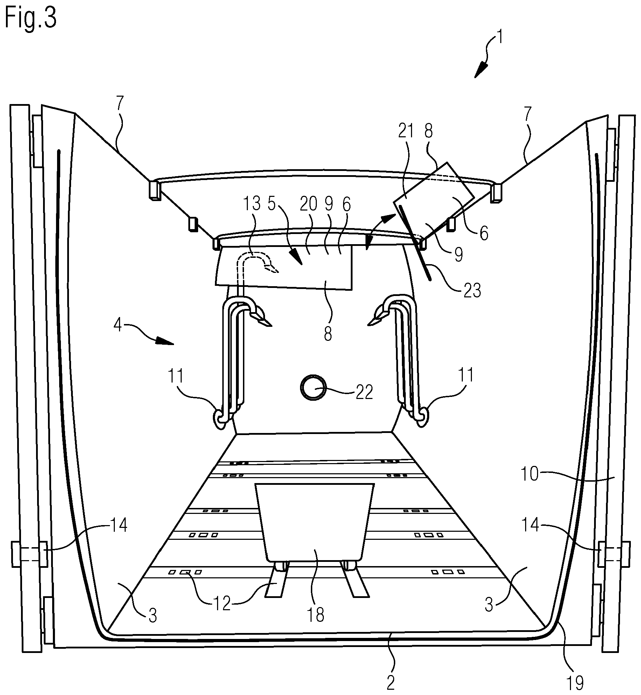

Die Figuren 2 und 3 zeigen im Detail einen Ausschnitt des Löschwassercontainers 1, bei welchem der Kastenboden 8 teilweise zum Behälterboden 2 des Löschwassercontainers geneigt angeordnet ist. Bei der vorliegenden Ausgestaltung umfasst das Sieb 6 zwei Siebsegmente 20, 21. Die Siebsegmente 20, 21 umfassen jeweils einen Teil des Kastenbodens 8 und einen Teil der Kastenwand 9. Ein erstes Siebelement 20 ist relativ zu dem Behälterboden 2 geneigt. Ein zweites Siebelement 21 ist im Vergleich zu dem ersten Siebelement 20 näher dem Behälterboden 2 zugewandt und schwenkbar an einer Seitenwand 3 angebunden. Zum Abreinigen des Siebes 6 kann das zweite Siebsegment 21 aus einer Ausgangsstellung (Fig. 2) in eine Reinigungsstellung (Fig. 3) überführt werden. Die Schwenkbewegung wird durch ein Bewegungsmittel 23 in Form eines Hydraulikzylinders unterstützt.

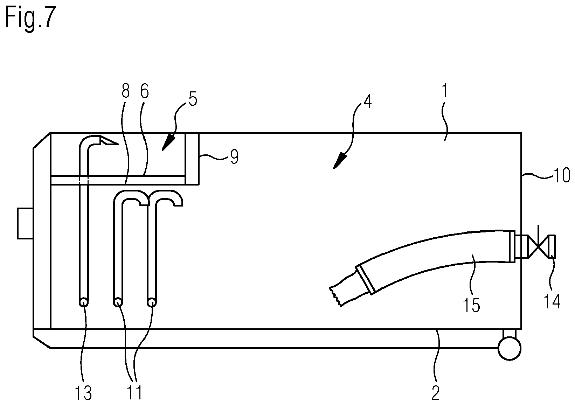

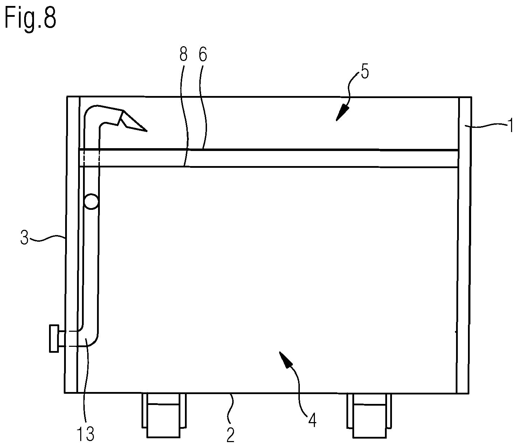

Figur 7 und Figur 8 zeigen eine weitere Ausgestaltung eines Löschwassercontainers. Dabei umfasst das Sieb ein Siebsegment und ist parallel zum Behälterboden angeordnet.

## Patentansprüche

1. Löschwassercontainer (1), umfassend einen Behälterboden (2) und mehrere Seitenwände (3), welche einen Containerraum begrenzen, wobei der Containerraum einen ersten Bereich (4) zur Aufnahme von aufbereitetem Löschwasser und einen zweiten Bereich (5) zum Befüllen des Containerraums mit verunreinigtem Löschwasser aufweist, **dadurch gekennzeichnet, dass** zwischen dem ersten Bereich (4) und dem zweiten Bereich (5) ein Sieb (6) angeordnet ist.

2. Löschwassercontainer nach Anspruch 1, **dadurch gekennzeichnet, dass** das Sieb (6) aus einem Lochblech ausgebildet ist.

3. Löschwassercontainer nach Anspruch 1 oder 2, **dadurch gekennzeichnet, dass** das Sieb (6) flächig ausgebildet ist und sich senkrecht zum Behälterboden (2) erstreckt und eine Trennwand bildet.

4. Löschwassercontainer nach Anspruch 1 oder 2, **dadurch gekennzeichnet, dass** der zweite Bereich (5) durch einen Kasten begrenzt ist, der den Kanten (7) der Seitenwände (3) zugeordnet ist.

5. Löschwassercontainer nach Anspruch 4, **dadurch gekennzeichnet, dass** der Kasten in Richtung des ersten Bereichs (4) von einem Kastenboden (8) und einer Kastenwand (9) begrenzt ist, wobei der Kastenboden (8) als Sieb (6) ausgebildet ist.

6. Löschwassercontainer nach Anspruch 5, **dadurch gekennzeichnet, dass** die Kastenwand (9) als Sieb (6) ausgebildet ist.

7. Löschwassercontainer nach einem der Ansprüche 1 bis 6, **dadurch gekennzeichnet, dass** zumindest ein Teil des Siebes (6) schwenkbar an einer Seitenwand (3) angeordnet ist.

8. Löschwassercontainer nach einem der Ansprüche 5 bis 7, **dadurch gekennzeichnet, dass** das Sieb (6) zumindest teilweise relativ zum Behälterboden (2) geneigt angeordnet ist.

9. Löschwassercontainer nach einem der Ansprüche 7 bis 8, **dadurch gekennzeichnet, dass** die Schwenkbewegung des Siebes (6) über ein Bewegungsmittel (23) erfolgt.

10. Löschwassercontainer nach einem der Ansprüche 1 bis 9, **dadurch gekennzeichnet, dass** die Maschenweite des Siebes (6) zwischen 2 mm und 10 mm, vorzugsweise 5 mm beträgt.

11. Löschwassercontainer nach einem der Ansprüche 1 bis 10, **dadurch gekennzeichnet, dass** eine Tür (10) vorgesehen ist.

12. Löschwassercontainer nach einem der Ansprüche 1 bis 11, **dadurch gekennzeichnet, dass** an zumindest einer Seitenwand (3) und/oder der Tür (10) zum Entnehmen und/oder Befüllen vorgesehene Wasseranschlüsse (11, 13, 14, 16) vorgesehen sind.

13. Löschwassercontainer nach einem der Ansprüche 1 bis 12, **dadurch gekennzeichnet, dass** Auffahrrampen zum Transportieren von Gegenständen in den ersten Bereich (4) vorgesehen sind.

14. Löschwassercontainer nach einem der Ansprüche 1 bis 13, **dadurch gekennzeichnet, dass** der Behälterboden (2) mit einer Einrichtung (12) zur Aufnahme von Materialwagen (18) versehen ist.

15. Löschwassercontainer nach einem der Ansprüche 1 bis 14, **dadurch gekennzeichnet, dass** der erste Bereich (4) und/oder der zweite Bereich (5) über eine Abdeckeinrichtung verschließbar sind.
